# EUROPEAN PATENT APPLICATION

(11) **EP 2 298 499 A1**
(43) Date of publication of application: **23.03.2011**
(21) Application number: 09769830.2
(22) Date of filing: 06.04.2009
(51) Int. Cl.: B24B 55/02, A61C 13/38

(54) **GRINDING APPARATUS AND GRINDING METHOD**

(30) Priority: 26.06.2008 JP 2008166656
(71) Applicant: Panasonic Corporation, Kadoma-shi Osaka 571-8501 (JP)
(72) Inventor: SEGAWA, Terutsugu, Chuo-ku Osaka 540-6207 (JP); HAMANO, Seiji, Chuo-ku Osaka 540-6207 (JP); SUGATA, Fumio, Chuo-ku Osaka 540-6207 (JP)
(74) Representative: Grünecker, Kinkeldey, Stockmair & Schwanhäusser Anwaltssozietät
(86) International application number: PCT/JP2009/001579
(87) International publication number: WO 2009/157120

(57) **Abstract**

A grinding apparatus (100) includes: a rotating grinding tool (102) for grinding a workpiece (101) immersed in a cooling liquid (106); vibration generating mechanisms (107a) to (107f) for applying vibrations to the cooling liquid (106) and generating cavitation; and a controller (108) for causing the vibration generating mechanisms (107a) to (107f) to generate the cavitation when the rotating grinding tool (102) is operated. The controller (108) turns on/off the vibration generating mechanisms (107a) to (107f) and adjusts amplitudes of the vibrations of the cooling liquid (106) generated by the vibration generating mechanisms (107a) to (107f) depending on a region in the workpiece (101) to be machined and one out of a plurality of machining steps to be performed.

## Description

### Technical Field

The present invention relates to a grinding apparatus that grinds a workpiece by using a rotating grinding tool, and particularly relates to a grinding apparatus that prevents clogging of a rotating grinding tool.

### Related Art

In recent years, ceramic materials have been improved in functionality and used as materials of various components. For example, densely sintered ceramic materials (hereinafter, will be called high-strength ceramic materials) have been used as prostheses in dentistry (hereinafter, will be called dental prostheses).

In the fabrication of dental prostheses from high-strength ceramic materials, CAD (Computer Aided Design)/CAM (Computer Aided Manufacturing) have been used. Specifically, a three-dimensional model of a dental prosthesis is created by a computer. The shape data of the created three-dimensional model is set in the controller of a machining unit including an NC machine (a rotating grinding tool or a rotating cutting tool). The NC machine is controlled by the controller based on the set shape data. A high-strength ceramic material is ground or cut by the NC machine, so that a dental prosthesis is fabricated from the high-strength ceramic material.

Since high-strength ceramic materials have high hardness, it takes quite a long time in this method to obtain the final shape of the prosthesis. When a machining speed is increased to shorten a machining time, a large load is applied to a working tool and thus the working tool may be seriously worn or damaged.

### <First example>

For example, in order to shorten a grinding time, a following fabrication method is proposed (e.g., see patent document 1). In this fabrication method, a ceramic material is used that is mainly composed of aluminum oxide particles and tetragonal zirconia particles containing cerium oxide. After a molded body is formed, presintering is performed thereon. Further, the presintered body is ground and then is densely sintered. A dental prosthesis is fabricated thus.

### <Second example>

Another following fabrication method is proposed (e.g., see patent document 2). In this fabrication method, a ceramic material is used that contains yttrium oxide and an oxide of one of aluminum, gallium, germanium, and indium. Similarly, after the formation of a molded body, presintering is performed thereon and then the presintered body is densely sintered after being ground. A dental prosthesis is fabricated thus.

### <Third example>

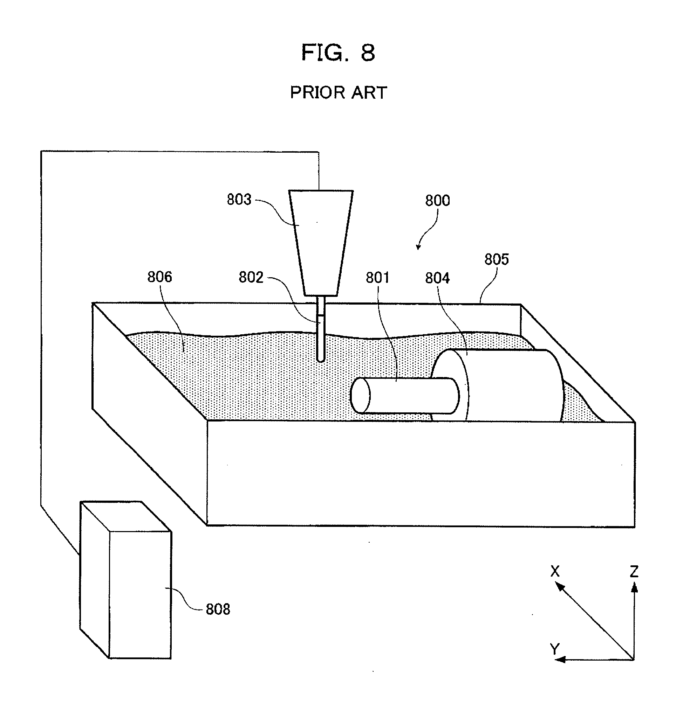

In order to prevent damage on a working tool and a workpiece, a following fabrication method is proposed (e.g., see patent document 3). In this fabrication method, a rotating cutting tool and the workpiece are cooled during cutting. As specifically shown in FIG. 8, in a cutting apparatus 800, a workpiece 801 held by a massive body fixing rotator 804 is immersed in a cooling liquid 806 stored in a tank 805. A controller 808 controls a spindle 803 to rotationally drive a rotating cutting tool 802. The workpiece 801 immersed in the cooling liquid 806 is cut by the rotating cutting tool 802 that is rotationally driven by the spindle 803. Thus it is possible to easily collect cutting powder of cutting while cooling the rotating cutting tool 802 and the workpiece 801.

### Citation List

### Patent Documents

Patent document 1: Japanese Patent Laid-Open No. 2006-271435
Patent document 2: National Publication of International
Patent Application No. 2003-506191
Patent document 3: Japanese Patent Laid-Open No. 10-6143

### Disclosure of the Invention

### Problems to be Solved by the Invention

In the fabrication methods of the first and second examples, however, it is necessary to perform dense sintering after grinding and thus shrinkage during dense sintering causes a dimensional change. Even when grinding is performed in consideration of shrinkage of dense sintering, an error occurs and an adjustment is necessary after dense sintering. Consequently, it is necessary to set a time for dense sintering and a time for adjustment after dense sintering.

On the other hand, in the fabrication method of the third example, when the workpiece is a densely sintered body, a time for dense sintering and a time for adjustment after dense sintering are not necessary after cutting. However, as compared with a presintered body, the densely sintered body may considerably increase the machining time of a dental prosthesis.

When grinding is performed instead of cutting, a rotating grinding tool and the workpiece are cooled by machining in water and the same effect can be expected. However, the rotating grinding tool is more susceptible to clogging than the rotating cutting tool. This is because grinding powder is finer than cutting powder and many rotating grinding tools have fine ends, resulting in serious problems in grinding. In other words, the third fabrication method cannot prevent the rotating grinding tool from being clogged by grinding powder of grinding.

The present invention has been devised in view of the problems. An object of the present invention is to provide a grinding apparatus that can reduce a load applied to a rotating grinding tool during grinding of a workpiece, eliminate the need for a dense sintering process after grinding, and efficiently fabricate an end product.

### Summary of the Invention

In order to attain the object, a grinding apparatus of the present invention has the following features:

(CL1) A grinding apparatus includes: (a) a rotating grinding tool for grinding a workpiece immersed in a cooling liquid; (b) vibration generating mechanisms for applying vibration to the cooling liquid and generating cavitation; and (c) a controller for causing the vibration generating mechanisms to generate the cavitation when the rotating grinding tool is operated.

When cavitation is generated at a point where the rotating grinding tool comes into contact with the workpiece (hereinafter, will be called a contact point), an impact generated at the disappearance of a cavity is applied near the contact point, so that grinding powder can be removed near the contact point.

When grinding powder adhered at a point on the rotating grinding tool (hereinafter, will be called an adhered point) is located at the point of cavitation, the grinding powder can be removed from the adhered point by erosion that is caused by an impact generated at the disappearance of the cavity.

In other words, the generated cavitation can prevent the adhering of grinding powder on the rotating grinding tool, thereby eliminating clogging of the rotating grinding tool.

Further, cavitation generated at the contact point can improve the reliable contact between the rotating grinding tool and the workpiece. The reliable contact between the rotating grinding tool and the workpiece can reduce a load applied to the rotating grinding tool during grinding, and can increase the machining speed of the rotating grinding tool.

With this configuration, even when the workpiece is a densely sintered body, the workpiece can be efficiently machined as compared with the fabrication method of the third example.

Thus it is possible to effectively grind a difficult-to-grind material such as a ceramic material and fabricate a dental prosthesis of a desired shape.

The present invention may be implemented as a grinding method as well as a grinding apparatus.

### Advantage of the Invention

According to the present invention, the active generation of cavitation can prevent the adhering of grinding powder on a rotating grinding tool, thereby eliminating clogging of the rotating grinding tool. Even when a densely sintered body is used as a workpiece, the workpiece can be efficiently machined.

For example, when cavitation is generated at the contact point, an impact generated at the disappearance of a cavity is applied near the contact point. Thus it is possible to remove grinding powder near the contact point.

By disposing an adhered point at the point of cavitation, grinding powder can be removed from the adhered point by erosion that is caused by an impact generated at the disappearance of a cavity.

Further, cavitation generated at the contact point can improve the reliable contact between the rotating grinding tool and the workpiece. The reliable contact between the rotating grinding tool and the workpiece can reduce a load applied to the rotating grinding tool during grinding, and can increase the machining speed of the rotating grinding tool.

### Brief Description of the Drawings

FIG. 1 is a perspective view showing a grinding apparatus according to a first embodiment;
FIG. 2A is a plan view showing the grinding apparatus according to the first embodiment;
FIG. 2B is a front view showing the grinding apparatus according to the first embodiment;
FIG. 3A is a plan view showing standing waves generated in a cooling liquid when vibration generating mechanisms with higher frequencies are operated in the grinding apparatus according to the first embodiment;
FIG. 3B is a front view showing the standing waves generated in the cooling liquid when the vibration generating mechanisms with higher frequencies are operated in the grinding apparatus according to the first embodiment;
FIG. 4A is a plan view showing standing waves generated in the cooling liquid when vibration generating mechanisms with lower frequencies are operated in the grinding apparatus according to the first embodiment;
FIG. 4B is a front view showing the standing waves generated in the cooling liquid when the vibration generating mechanisms with lower frequencies are operated in the grinding apparatus according to the first embodiment;
FIG. 5A shows a first process of generating cavitation at the contact point between a rotating grinding tool and a workpiece in the grinding apparatus according to the first embodiment;
FIG. 5B shows a second process of generating cavitation at the contact point between the rotating grinding tool and the workpiece in the grinding apparatus according to the first embodiment;
FIG. 5C shows a third process of generating cavitation at the contact point between the rotating grinding tool and the workpiece in the grinding apparatus according to the first embodiment;
FIG. 6 shows a table of grinding conditions for grinding the workpiece in the grinding apparatus according to the first embodiment;
FIG. 7 is a flowchart showing a grinding method using the grinding apparatus according to the first embodiment; and
FIG. 8 is a perspective view showing a grinding apparatus according to the prior art.

### Description of Embodiments

### (First Embodiment)

The following will describe a first embodiment of the present invention.

### <Configuration>

First, the following will describe the configuration of a grinding apparatus according to the present embodiment.

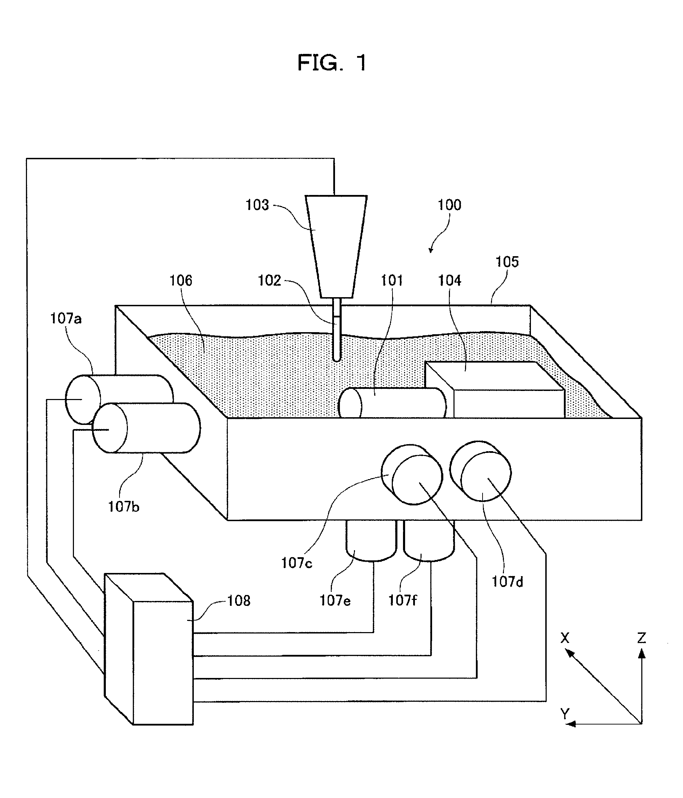

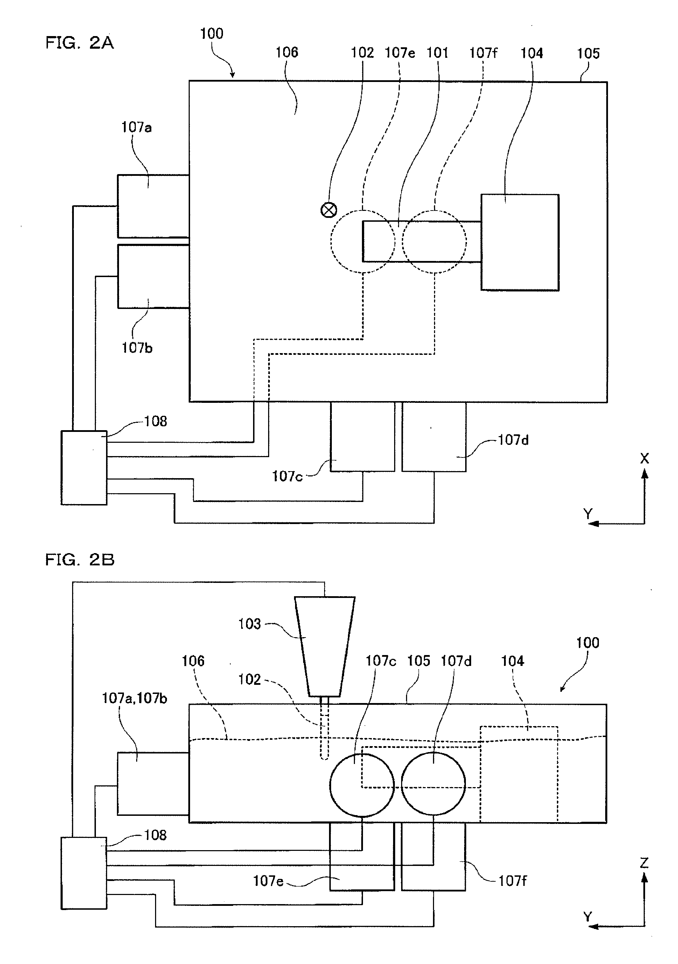

As shown in FIGS. 1, 2A, and 2B, a grinding apparatus 100 is an apparatus for fabricating a dental prosthesis. In the grinding apparatus 100, a ceramic workpiece 101 is ground. The workpiece 101 held by a workpiece holding mechanism 104 is immersed in a cooling liquid 106 stored in a tank 105. The workpiece 101 immersed in the cooling liquid 106 is ground by a rotating grinding tool 102 that is rotationally driven by a spindle 103 and rotates at high speed. At this point, vibration generating mechanisms 107a to 107f attached to the outer walls of the tank 105 vibrate the cooling liquid 106 to generate cavitation.

In this configuration, positions, amplitudes, and periods of the vibration generating mechanisms 107a to 107f are adjusted so as to generate a cavity at a point where the rotating grinding tool 102 comes into contact with the workpiece 101. Thus quite a high pressure is generated at an instant of a disappearance of the cavity, and the high pressure makes it possible to increase contact between the rotating grinding tool 102 and the workpiece 101 while removing grinding powder between the rotating grinding tool 102 and the workpiece 101.

For example, a dental prosthesis is fabricated by using a densely sintered ceramic material, which is a difficult-to-grind material, as the workpiece 101. In this case, it is possible to reduce a load applied to the rotating grinding tool 102 during grinding. Thus, without seriously wearing or damaging the rotating grinding tool 102, it is possible to increase a machining speed as compared with the absence of periodic vibrations applied to the cooling liquid 106. Consequently, it is possible to reduce the fabrication time of the dental prosthesis and eliminate a dense sintering process after machining. Since it is possible to eliminate the dense sintering process after machining, it is not necessary to consider or adjust a shrinkage dimension error caused by sintering. Therefore, the machined workpiece can be directly used as a dental prosthesis.

### <Grinding apparatus 100>

For example, the grinding apparatus 100 includes the rotating grinding tool 102, the spindle 103, the workpiece holding mechanism 104, the tank 105, the cooling liquid 106, the vibration generating mechanisms 107a to 107f, and a controller 108.

Further, a dental prosthesis is fabricated from the workpiece 101 by using CAD (Computer Aided Design)/CAM (Computer Aided Manufacturing). Specifically, a three-dimensional model of the dental prosthesis is created by a computer. The shape data of the created three-dimensional model is set in the controller 108 of the grinding apparatus 100 including an NC machine and so on (such as the rotating grinding tool 102, the spindle 103, and so on). The spindle 103, the vibration generating mechanisms 107a to 107f, and so on are controlled by the controller 108 based on the set shape data. The workpiece 101 is ground by the NC machine and so on (such as the rotating grinding tool 102, the spindle 103, and so on). The dental prosthesis is fabricated from the workpiece 101.

### <Workpiece 101>

The workpiece 101 is a cylinder made of a ceramic material. To be specific, the workpiece 101 is a densely sintered body of a molded body that is made of a raw material compound containing 65.9 wt% to 69.9 wt% of zirconium oxide, 10.1 wt% to 11.1 wt% of cerium oxide, 19.5 wt% to 23.5 wt% of aluminum oxide, 0.01 wt% to 0.03 wt% of titanium oxide, and 0.04 wt% to 0.08 wt% of magnesium oxide. The workpiece 101 is obtained by a method described in Japanese Patent No. 2945935.

The overall workpiece 101 is immersed in the cooling liquid 106. The axis of the workpiece 101 is directed along X direction, the top surface of the cylinder is disposed at the center of the tank 105, and the bottom of the cylinder is held by the workpiece holding mechanism 104.

### <Rotating grinding tool 102>

The rotating grinding tool 102 has a grinding portion containing diamond particles. The rotating grinding tool 102 is rotationally driven by the spindle 103 and is rotated at high speed about a rotation axis. During the high-speed rotation, the rotating grinding tool 102 grinds the material in contact with the grinding portion.

### <Spindle 103>

The spindle 103 applies a rotational driving force for grinding to the rotating grinding tool 102.

### <Workpiece holding mechanism 104>

The workpiece holding mechanism 104 holds the workpiece 101 along a direction intersecting the rotation axis of the rotating grinding tool 102.

The workpiece holding mechanism 104 is disposed between the front and rear of the tank 105, and is disposed near the right side of the tank 105, and is set on the bottom of the tank 105. The bottom of the cylindrical workpiece 101 is held by the workpiece holding mechanism 104.

### <Tank 105>

The tank 105 is a container storing the cooling liquid 106. For example, the size of the tank 105 is 300 mm in Y direction and 240 mm in X direction. The tank 105 is filled with the cooling liquid 106 such that a height from the bottom of the tank 105 to the liquid level of the cooling liquid 106 is 75 mm. The workpiece 101 held by the workpiece holding mechanism 104 is immersed in the cooling liquid 106. The grinding portion of the rotating grinding tool 102 is immersed in the cooling liquid 106 during grinding. The workpiece 101 and the rotating grinding tool 102 are cooled in the cooling liquid 106.

### <Cooling liquid 106>

The cooling liquid 106 can be prepared by, for example, diluting water-soluble cutting fluid WX-805H of TAIYU CO., LTD. 20 times with tap water.

### <Vibration generating mechanisms 107a to 107f>

The vibration generating mechanisms 107a to 107f are oscillators of shaft vibration type. To be specific, the vibration generating mechanisms 107a to 107f are bolted Langevin transducers, each generating shaft vibrations with a diameter of 50 mm. Periodic vibrations of the vibration generating mechanisms 107a to 107f are determined on conditions that standing waves are generated in the cooling liquid 106. Further, the vibration generating mechanisms 107a to 107f are periodically vibrated by a periodic vibration generator (not shown) and apply desired vibrations such as longitudinal waves to the cooling liquid 106 depending on the grinding conditions.

### <Vibration generating mechanisms 107a and 107b>

The axes of the vibration generating mechanisms 107a and 107b are directed along Y direction. The vibration generating mechanisms 107a and 107b are arranged in a row and are spaced 5 mm apart in X direction. In FIG. 1, the vibration generating mechanisms 107a and 107b are disposed at the center of the left side of the tank 105 and at the middle between the bottom of the tank 105 and the liquid level of the cooling liquid 106. The vibration generating mechanisms 107a and 107b are selectively operated to apply vibrations from the left side of the tank 105 to the cooling liquid 106 stored in the tank 105.

### <Vibration generating mechanisms 107c and 107d>

The axes of the vibration generating mechanisms 107c and 107d are directed along X direction. The vibration generating mechanisms 107c and 107d are arranged in a row and are spaced 5 mm apart in Y direction. In FIG. 1, the vibration generating mechanisms 107c and 107d are disposed at the center of the front side of the tank 105 and at the middle between the bottom of the tank 105 and the liquid level of the cooling liquid 106. The vibration generating mechanisms 107c and 107d are selectively operated to apply vibrations from the front side of the tank 105 to the cooling liquid 106 stored in the tank 105.

### <Vibration generating mechanisms 107e and 107f>

The axes of the vibration generating mechanisms 107e and 107f are directed along Z direction. The vibration generating mechanisms 107e and 107f are arranged in a row and are spaced 5 mm apart in Y direction. In FIG. 1, the vibration generating mechanisms 107e and 107f are disposed at the center of the bottom of the tank 105. The vibration generating mechanisms 107e and 107f are selectively operated to apply vibrations from the bottom of the tank 105 to the cooling liquid 106 stored in the tank 105.

### <Periodic vibrations>

The following will describe the periodic vibrations applied from the vibration generating mechanisms 107a to 107f. Moreover, the velocity of sound in the liquid is 1500 m/s.

The periodic vibrations of 25 kHz are applied from the vibration generating mechanism 107a. Thus a longitudinal wave is applied from the vibration generating mechanism 107a with a wavelength of 1500000 mm/s ÷ 25 kHz = 60 mm. Moreover, an integral multiple (ten times) of the half wavelength of the longitudinal wave (60 mm ÷ 2 = 30 mm) is equal to the size of the tank 105 (300 mm) in Y direction. Thus the conditions for generating a standing wave are satisfied.

The periodic vibrations of 12.5 kHz are applied from the vibration generating mechanism 107b. Thus a longitudinal wave is applied from the vibration generating mechanism 107b with a wavelength of 1500000 mm/s ÷ 12.5 kHz = 120 mm. Moreover, an integral multiple (five times) of the half wavelength of the longitudinal wave (120 mm ÷ 2 = 60 mm) is equal to the size of the tank 105 (300 mm) in Y direction. Thus the conditions for generating a standing wave are satisfied.

The periodic vibrations of 25 kHz are applied from the vibration generating mechanism 107c. Thus a longitudinal wave is applied from the vibration generating mechanism 107c with a wavelength of 1500000 mm/s ÷ 25 kHz = 60 mm. Moreover, an integral multiple (eight times) of the half wavelength of the longitudinal wave (60 mm ÷ 2 = 30 mm) is equal to the size of the tank 105 (240 mm) in X direction. Thus the conditions for generating a standing wave are satisfied.

The periodic vibrations of 12.5 kHz are applied from the vibration generating mechanism 107d. Thus a longitudinal wave is applied from the vibration generating mechanism 107d with a wavelength of 1500000 mm/s ÷ 12.5 kHz = 120 mm. Moreover, an integral multiple (four times) of the half wavelength of the longitudinal wave (120 mm - 2 = 60 mm) is equal to the size of the tank 105 (240 mm) in X direction. Thus the conditions for generating a standing wave are satisfied.

The periodic vibrations of 30 kHz are applied from the vibration generating mechanism 107e. Thus a longitudinal wave is applied from the vibration generating mechanism 107e with a wavelength of 1500000 mm/s ÷ 30 kHz = 50 mm. Moreover, an integral multiple (three times) of the half wavelength of the longitudinal wave (50 mm ÷ 2 = 25 mm) is equal to a height (75 mm) to the liquid level of the cooling liquid 106. Thus the conditions for generating a standing wave are satisfied.

The periodic vibrations of 20 kHz are applied from the vibration generating mechanism 107f. Thus a longitudinal wave is applied from the vibration generating mechanism 107f with a wavelength of 1500000 mm/s ÷ 20 kHz = 75 mm. Moreover, an integral multiple (twice) of the half wavelength of the longitudinal wave (75 mm ÷ 2 = 37.5 mm) is equal to a height (75 mm) to the liquid level of the cooling liquid 106. Thus the conditions for generating a standing wave are satisfied.

### <Standing waves>

The following will describe standing waves generated in the cooling liquid 106 when the vibration generating mechanisms 107a, 107c, and 107e are operated, and will describe standing waves generated in the cooling liquid 106 when the vibration generating mechanisms 107b, 107d, and 107f are operated.

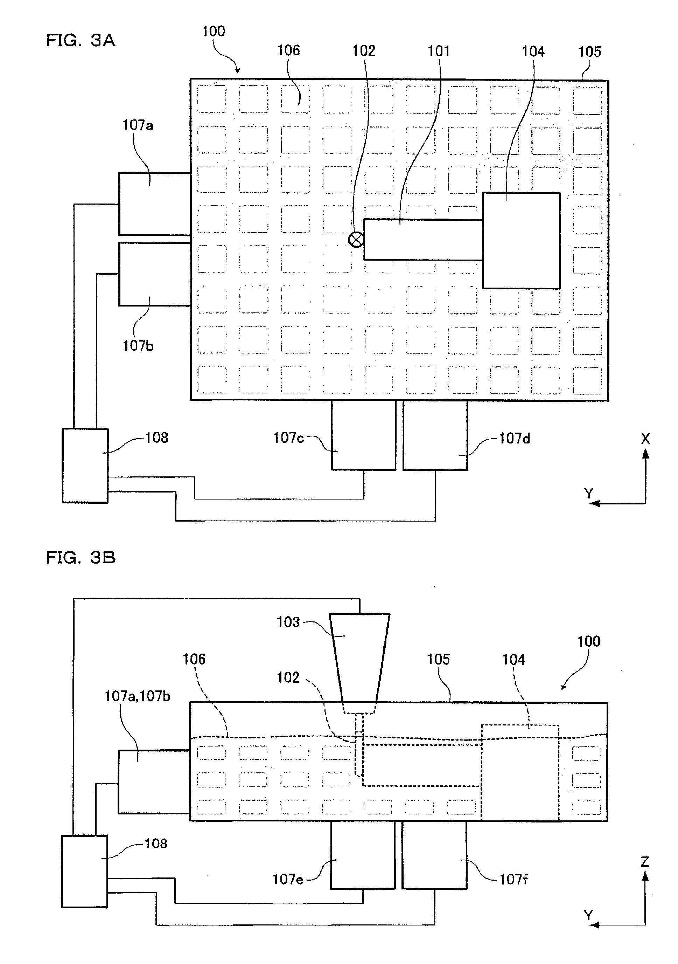

As shown in FIGS. 3A and 3B, when the vibration generating mechanisms 107a, 107c, and 107e are operated, white portions appear like squares at intervals of 30 mm in X direction, 30 mm in Y direction, and 25 mm in Z direction and black portions appear between the white portions in the cooling liquid 106.

In the white portions, variations in density are small, whereas variations in density are large in the black portions. The black portions are prone to occurrence of cavitation because of large variations in density.

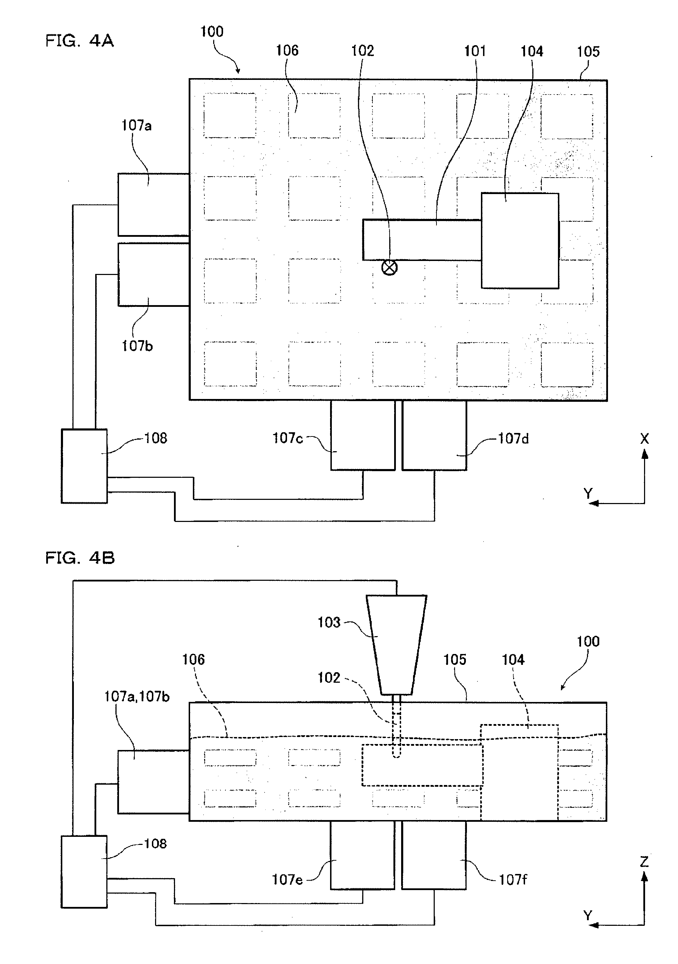

As shown in FIGS. 4A and 4B, when the vibration generating mechanisms 107b, 107d, and 107f are operated, white portions appear like squares at intervals of 60 mm in X direction, 60 mm in Y direction, and 37.5 mm in Z direction and black portions appear between the white portions in the cooling liquid 106. In the case of the vibration generating mechanisms 107b, 107d, and 107f are operated, the squares and the intervals between the white portions are larger than the case of the vibration generating mechanisms 107a, 107c, and 107e are operated.

### <Cavitation>

The following will describe a process in which cavitation occurs at the contact point between the rotating grinding tool 102 and the workpiece 101.

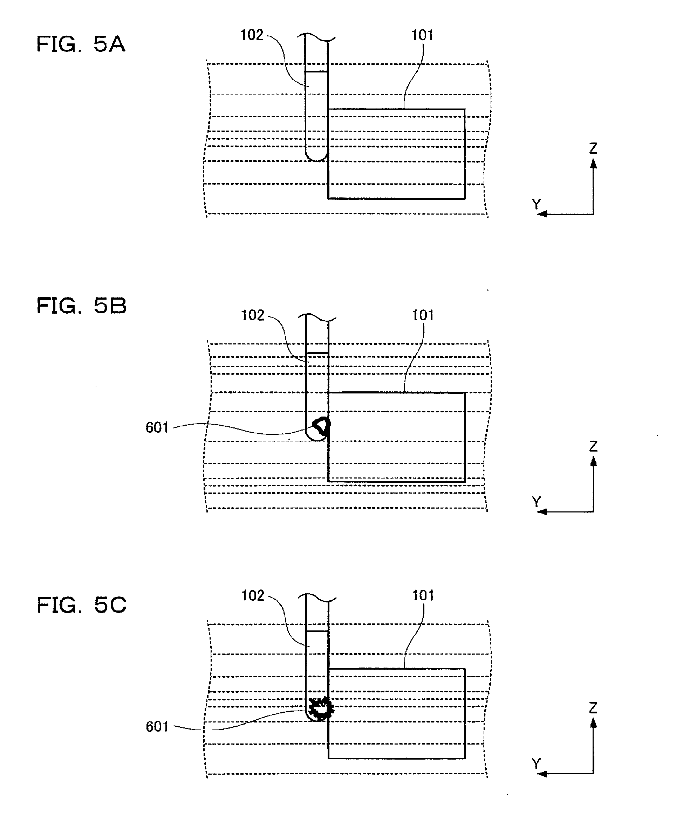

In this process, a periodic vibration is applied in Z direction, a longitudinal wave is generated in the cooling liquid, and the density fluctuates in order as shown in FIGS. 5A, 5B, and 5C. In FIGS. 5A to 5C, broken lines spaced at small intervals indicate a high density and broken lines spaced at large intervals indicate a low density.

For example, in FIG. 5A, a point where the rotating grinding tool 102 comes into contact with the workpiece 101 has a high density. The same point has a low density in FIG. 5B and has a high density in FIG. 5C. As shown in FIGS. 5A and 5B, a change from the high density to the low density causes a cavity 601 at the point. As shown in FIGS. 5B and 5C, a change from the low density to the high density eliminates the cavity 601 at the point.

As shown in FIGS. 5A to 5C, the periodic vibrations applied to the cooling liquid 106 cause variations in density in the cooling liquid 106. When a pressure in the cooling liquid 106 is lower than a saturated vapor pressure, cavitation occurs. At this point, the liquid is boiled or gas is generated by liberation of dissolved gas, and then a small bubble (cavity 601) that the inside is like a vacuum is generated.

The disappearance of the bubble (cavity 601) causes erosion. At this point, an extremely high impact pressure is generated and the impact pressure causes an impact near the bubble (cavity 601), so that erosion occurs near the bubble (cavity 601). By using this phenomenon, it is possible to prevent adhering of grinding powder (generated while grinding) on the rotating grinding tool 102.

When the rotating grinding tool 102 is in contact with the workpiece 101, the disappearance of the bubble (cavity) at the rotating grinding tool 102 generates an impact pressure that attracts the rotating grinding tool 102 to the workpiece 101, so that the rotating grinding tool 102 can be more closely contacted with the workpiece 101.

### <Region>

As shown in FIGS. 3A and 3B, the black portions appear passing through the axis of the cylindrical workpiece 101 held by the workpiece holding mechanism 104, passing along the top surface of the cylinder, passing perpendicularly to the axis of the workpiece 101, and crossing the contact point between the workpiece holding mechanism 104 and the workpiece 101.

As shown in FIGS. 4A and 4B, the black portions appear passing through the axis of the cylindrical workpiece 101 held by the workpiece holding mechanism 104 and covering the overall cylinder. In the case where the vibration generating mechanisms 107b, 107d, and 107f are operated, the black portions can more widely cover the workpiece 101, as compared with the case where the vibration generating mechanisms 107a, 107c, and 107e are operated.

In the case of grinding near a region where the black portions and workpiece 101 overlap each other as shown in FIGS. 3A and 3B (hereinafter will be called a first region), the vibration generating mechanisms 107a, 107c, and 107e are preferably operated. In the case of grinding near a region other than the first region (hereinafter, will be called a second region), the vibration generating mechanisms 107b, 107d, and 107f are preferably operated.

When high machining accuracy is required, conversely the absence of cavitation may be preferable. This is because an impact pressure generated at the disappearance of a bubble attracts the rotating grinding tool 102 to the workpiece 101 and may reduce the machining accuracy.

Moreover, in the case where the amount of grinding powder is not so large at this point, cavitation excessively occurs. Thus the occurrence of cavitation may be reduced near the rotating grinding tool 102 depending on a machining step to be performed.

Further, by increasing the amplitude, it is possible to actively generate cavitation, improve the reliable contact between the rotating grinding tool and the workpiece, reduce a load applied to the rotating grinding tool, and increase the machining speed of the rotating grinding tool, whereas by reducing the amplitude, it is possible to reduce the influence of cavitation on the machining accuracy.

Consequently, in a machining step where the machining speed is more significant than the machining accuracy, the amplitude is preferably increased, whereas in a machining step where the machining accuracy is more significant than the machining speed, the amplitude is preferably reduced.

### <Grinding conditions>

The following will describe grinding conditions for grinding the workpiece 101 in the grinding apparatus 100.

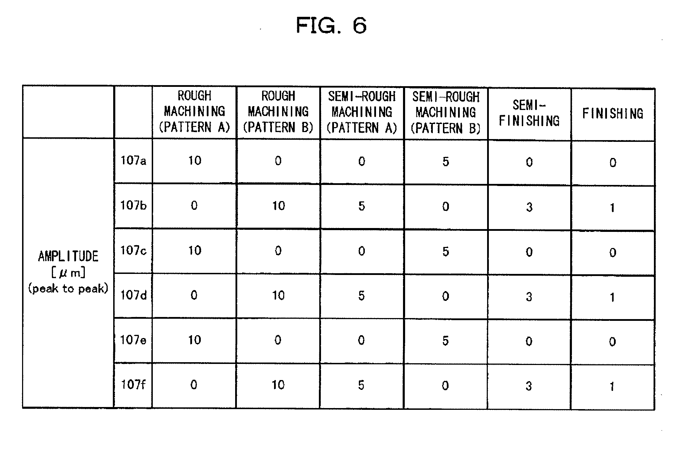

As shown in FIG. 6, the periodic vibration generator (not shown) turns on/off the vibration generating mechanisms 107a to 107f, and adjusts the amplitudes of the vibration generating mechanisms 107a to 107f, depending on a region in the workpiece 101 to be machined and one out of a plurality of machining steps to be performed.

In grinding, rough machining, semi-rough machining, semi-finishing, and finishing are performed in this order. Rough machining generates the largest amount of grinding powder and semi-rough machining generates the second largest amount of grinding powder. Finishing generates the smallest amount of grinding powder and semi-finishing generates the second smallest amount of grinding powder. Higher machining accuracy is required in rough-machining, semi-rough machining, semi-finishing, and finishing in this order.

The periodic vibration generator (not shown) changes the amplitudes of periodic vibrations applied from the vibration generating mechanisms 107a to 107f, depending on a machining step to be performed. In a machining step requiring high machining accuracy, the amplitudes are reduced so as to less affect the machining accuracy. In a machining step not requiring high machining accuracy, the amplitudes are increased and the vibration generating mechanisms 107a to 107f are selectively operated depending on a region in the workpiece 101 to be machined. To be specific, the amplitudes are changed as described in the following grinding conditions (1) to (4):

(1) In the case of rough machining, (a) in pattern A, the vibration generating mechanisms 107a, 107c, and 107e are turned on and the vibration generating mechanisms 107b, 107d, and 107f are turned off. Outputs to the vibration generating mechanisms 107a, 107c, and 107e are adjusted so as to apply periodic vibrations with amplitude of 10 µm from the vibration generating mechanisms 107a, 107c, and 107e. (b) In pattern B, the vibration generating mechanisms 107b, 107d, and 107f are turned on and the vibration generating mechanisms 107a, 107c, and 107e are turned off. Outputs to the vibration generating mechanisms 107b, 107d, and 107f are adjusted so as to apply periodic vibrations with amplitude of 10 µm from the vibration generating mechanisms 107b, 107d, and 107f.

(2) In the case of semi-rough machining, (a) in pattern A, the vibration generating mechanisms 107b, 107d, and 107f are turned on and the vibration generating mechanisms 107a, 107c, and 107e are turned off. Outputs to the vibration generating mechanisms 107b, 107d, and 107f are adjusted so as to apply periodic vibrations with amplitude of 5 µm from the vibration generating mechanisms 107b, 107d, and 107f. (b) In pattern B, the vibration generating mechanisms 107a, 107c, and 107e are turned on and the vibration generating mechanisms 107b, 107d, and 107f are turned off. Outputs to the vibration generating mechanisms 107a, 107c, and 107e are adjusted so as to apply periodic vibrations with amplitude of 5 µm from the vibration generating mechanisms 107a, 107c, and 107e.

(3) In the case of semi-finishing, the vibration generating mechanisms 107b, 107d, and 107f are turned on and the vibration generating mechanisms 107a, 107c, and 107e are turned off. Outputs to the vibration generating mechanisms 107b, 107d, and 107f are adjusted so as to apply periodic vibrations with amplitude of 3 µm from the vibration generating mechanisms 107b, 107d, and 107f.

(4) In the case of finishing, the vibration generating mechanisms 107b, 107d, and 107f are turned on and the vibration generating mechanisms 107a, 107c, and 107e are turned off. Outputs to the vibration generating mechanisms 107b, 107d, and 107f are adjusted so as to apply periodic vibrations with amplitude of 1 µm from the vibration generating mechanisms 107b, 107d, and 107f.

### <Grinding method>

The following will describe a grinding method using the grinding apparatus 100.

In this method, CAD (Computer Aided Design)/CAM (Computer Aided Manufacturing) is used. A three-dimensional model of a dental prosthesis is created beforehand by a computer. It is assumed that the shape data of the created three-dimensional model is set in the grinding apparatus 100.

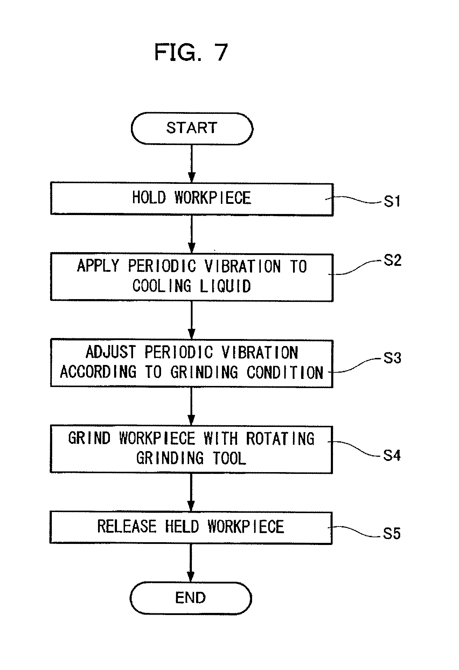

As shown in FIG. 7, the dental prosthesis of a desired shape is fabricated from the ceramic workpiece 101 according to the following grinding method of (S1) to (S5). At this point, the grinding apparatus 100 is controlled based on the preset shape data.

(S1) First, the ceramic workpiece 101 is held by the workpiece holding mechanism 104. The workpiece 101 held by the workpiece holding mechanism 104 is immersed in the cooling liquid 106 stored in the tank 105.

(S2) Next, periodic vibrations are applied from the vibration generating mechanisms 107a to 107f to the cooling liquid 106. At this point, an integral multiple of a half wavelength of a longitudinal wave applied to the cooling liquid 106 is equal to the size of the tank 105 and the height of the liquid level of the cooling liquid 106, so that standing waves are generated in the cooling liquid 106.

(S3) Next, the amplitudes of the periodic vibrations applied from the vibration generating mechanisms 107a to 107f are adjusted according to the grinding conditions shown in FIG. 6. In this case, the amplitudes of the periodic vibrations are reduced in order of rough machining, semi-rough machining, semi-finishing, and finishing, thereby reducing the influence of the amplitudes on the machining accuracy.

The grinding conditions include the hardness and the final shape of the workpiece 101 as well as the type of machining.

(S4) Next, the workpiece 101 is ground by the rotating grinding tool 102. At this point, the rotating grinding tool 102 is rotationally driven by the spindle 103 and rotates at high speed. The rotating grinding tool 102 rotating at high speed is brought into contact with the workpiece 101 to grind the workpiece 101.

Between the machining steps, the periodic vibration generator (not shown) may move the rotating grinding tool 102 to a part not contact with the workpiece 101 in the black portions (large variations in density). Thus it is possible to remove grinding powder on the rotating grinding tool 102.

(S5) Next, the workpiece 101 (dental prosthesis) ground into the desired shape is released from the workpiece holding mechanism 104.

After the completion of machining, the grinding powder generated in the grinding of the workpiece 101 is removed together with the discharged cooling liquid 106. If necessary, the inside of the tank 105 may be cleaned by pouring the cooling liquid 106.

### <Summary>

As has been described, in the present embodiment, the workpiece 101 is ground while periodic vibrations are applied to the cooling liquid 106. Thus as compared with the absence of periodic vibrations, it is possible to suppress the adhering of grinding powder on the rotating grinding tool 102. Further, it is possible to improve the reliable contact between the grinding portion (a portion of diamond particles) of the rotating grinding tool 102 and the workpiece 101, and reduce a grinding resistance (load) during grinding. A reduction in grinding resistance (load) makes it possible to increase the feeding speed and the cutting amount of the rotating grinding tool 102 during grinding. Consequently, it is possible to shorten a grinding time while preventing problems such as damage on the rotating grinding tool 102. For example, in the case where coping grinding for the third tooth of an upper jaw is performed by using a completely dense sintered body of a ceramic material as a workpiece, the grinding time can be reduced by 10%.

Thus in the fabrication of a dental prosthesis made of a difficult-to-grind material such as a densely sintered ceramic material, the effect of considerably shortening grinding or a time for grinding can be obtained. The present invention is also applicable to the fabrication of an artificial bone made of a similar difficult-to-grind material such as a ceramic material in other medical fields.

### <Others>

(1) The workpiece 101 may be made of other ceramic materials such as yttria tetragonal zirconia polycrystal (Y-TZP). Further, the workpiece 101 may be a presintered body or a green body or may be made of other difficult-to-grind materials. Furthermore, a material of a rectangular solid and a material with a fixture for holding the material may be used.

These materials can be also improved grinding efficiency. The vibration generating mechanisms 107a to 107f generate longitudinal waves in the cooling liquid 106 and variations in density are large at the contact point between the rotating grinding tool 102 and the workpiece 101, thereby improving the grinding efficiency.

(2) The periodic vibrations applied to the cooling liquid 106 from the vibration generating mechanisms 107a to 107f may be determined on conditions that a half wavelength corresponds to a length obtained by dividing a distance (length) between the sides of the tank 105 or a distance from the bottom of the tank 105 to the liquid level by an integer.

For example, in the case where periodic vibrations with amplitudes of 1 µm to 50 µm and frequencies of 1 kHz to 100 kHz are applied to the cooling liquid 106, cavitation is more likely to occur and thus it is possible to suppress the adhering of grinding powder, which is generated during the grinding of the workpiece 101, on the rotating grinding tool 102.

The amplitudes may be expressed as numeric values other than the numeric values of the grinding conditions shown in FIG. 6. Thus the vibration generating mechanisms with different frequencies can be used and different workpieces 101 can be machined.

(3) Only the workpiece 101 may be immersed in the cooling liquid 106. Further, the tank 105 and the workpiece holding mechanism 104 may be integrated.

With this configuration, the workpiece holding mechanism 104 and the workpiece 101 can be more flexibly arranged and the workpiece 101 can be tilted and rotated. Moreover, it is possible to increase the flexibility about the shape of workpiece at the completion of final machining.

(4) The vibration generating mechanisms 107a to 107f may be multiple identical oscillators.

Thus it is possible to improve the in-plane uniformity of periodic vibrations applied to the cooling liquid 106 from the surfaces of the tank 105.

The vibration generating mechanisms 107 may be disposed respectively on both sides of the tank 105. With this configuration, it is possible to minimize a time period during which the grinding efficiency does not increase because longitudinal waves generated by the vibration generating mechanisms 107a to 107f do not reach the contact point between the rotating grinding tool 102 and the workpiece 101 during grinding because of the positional relationship between the workpiece 101 and the rotating grinding tool 102.

(5) The vibration generating mechanisms 107a to 107f may be actuators, each including one of a magnetostrictor and a piezoelectric element.

Thus it is possible to change vibration frequencies without exchanging oscillators and make fine adjustments to the frequencies of the periodic vibrations applied from the vibration generating mechanisms 107a to 107f to the cooling liquid 106, so that standing waves are generated.

(6) The cooling liquid 106 may be replaced between the machining steps during grinding.

Thus it is possible to remove grinding powder that is generated by grinding the workpiece 101 and stored in the tank 105, and keep the excellent effect of vibrations applied to the cooling liquid 106.

(7) The workpiece holding mechanism 104 may be set on a hanging structure instead of the bottom of the tank 105. The hanging structure, for example, an arm (not shown) separated from the tank 105 is immersed in the cooling liquid 106 stored in the tank 105.

Thus it is possible to prevent vibrations applied from the vibration generating mechanisms 107a to 107f from being attenuated by the workpiece holding mechanism 104.

The present invention is not limited to the foregoing contents and various changes can be made within the scope of the invention.

### Industrial Applicability

The present invention can be used as, e.g., a grinding apparatus that grinds a workpiece by using a rotating grinding tool, and particularly used as a grinding apparatus that prevents clogging of a rotating grinding tool.

## Claims

1. A grinding apparatus comprising:
a rotating grinding tool for grinding a workpiece immersed in a cooling liquid;
vibration generating mechanisms for applying vibration to the cooling liquid and generating cavitation; and
a controller for causing the vibration generating mechanisms to generate the cavitation when the rotating grinding tool is operated.

2. The grinding apparatus according to claim 1, wherein the controller controls the vibration generating mechanisms to generate a longitudinal wave in the cooling liquid in which a half wavelength of the longitudinal wave corresponds to a length obtained by dividing a length from a side to an opposite side of a tank in which the cooling liquid is stored by an integer.

3. The grinding apparatus according to claim 1, wherein the controller controls the vibration generating mechanisms to generate a longitudinal wave in the cooling liquid in which a half wavelength of the longitudinal wave corresponds to a length obtained by dividing a length from a bottom of a tank in which the cooling liquid is stored to a liquid level of the cooling liquid by an integer.

4. The grinding apparatus according to claim 1, wherein the controller turns on/off the vibration generating mechanisms and adjusts amplitudes of the vibrations of the cooling liquid generated by the vibration generating mechanisms depending on a region in the workpiece to be machined and one out of a plurality of machining steps to be performed.

5. The grinding apparatus according to claim 1, wherein the workpiece is made of a ceramic material which is a raw material of a dental prosthesis.

6. A grinding method, wherein a workpiece is immersed in a cooling liquid and ground by means of a rotating grinding tool, the method comprising a vibration generating step for applying vibrations to the cooling liquid, thereby generating cavitation in the liquid.

7. The grinding method according to claim 6, wherein in the vibration generating step, a longitudinal wave is generated in the cooling liquid, wherein the longitudinal wave has a wave motion which propagates in a first direction along a rotation axis of the rotating grinding tool or a second direction that intersects the rotating axis.

8. The grinding method according to claim 6, wherein in the vibration generating step, a longitudinal wave is generated in the cooling liquid, a half wavelength of the longitudinal wave corresponds to a length obtained by dividing a length from a sides to an opposite side of a tank in which the cooling liquid is stored by an integer.

9. The grinding method according to claim 6, wherein in the vibration generating step, a longitudinal wave is generated in the cooling liquid, a half wavelength of the longitudinal wave corresponds to a length obtained by dividing a length from a bottom of a tank in which the cooling liquid is stored to a liquid level of the cooling liquid by an integer.

10. The grinding method according to claim 6, wherein in the vibration generating step, a first vibration or a second vibration is selectively applied to the cooling liquid, the first vibration has a first frequency, and the second vibration has a second frequency different from the first frequency.

11. The grinding method according to claim 6, wherein in the vibration generating step, the vibrations are applied in a state in which a region in the workpiece to be machined is disposed near a portion where variations in density of a longitudinal wave generated in the cooling liquid are large.

12. The grinding method according to claim 6, wherein :
a first portion where a density of longitudinal wave generated in the cooling liquid varies largely is generated, and
the vibration generating step further comprises the step of moving the rotating grinding tool to a part not in contact with the workpiece in the first potion.

13. The grinding method according to claim 6, wherein in the vibration generating step, the generating of vibration of the cooling liquid is turned on/off and amplitudes of the vibrations of the cooling liquid is adjusted depending on a region in the workpiece to be machined and one out of a plurality of machining steps to be performed.

14. The grinding method according to claim 13, wherein in the vibration generating step, the vibrations are adjusted by switching the amplitude of the vibration in two levels.

15. The grinding method according to claim 6, wherein the workpiece is made of a ceramic material, which is the workpiece is ground to fabricate a dental prosthesis.
